Europäisches Patentamt

European Patent Office

Office européen des brevets

(19)

(11) Veröffentlichungsnummer : **0 190 270 B1**

(12) **EUROPÄISCHE PATENTSCHRIFT**

(45) Veröffentlichungstag der Patentschrift :
17.05.89

(21) Anmeldenummer : 85903986.9

(22) Anmeldetag : 07.08.85

(86) Internationale Anmeldenummer :
PCT/DE 85/00266

(87) Internationale Veröffentlichungsnummer :
WO/8601291 (27.02.86 Gazette 86/05)

(51) Int. Cl.⁴ : **G 01 L 1/18, G 01 L 1/22, G 01 L 9/06**

(54) MESSWERTAUFNEHMER ZUM ELEKTRISCHEN MESSEN VON KRÄFTEN, DREHMOMENTEN, BESCHLEUNIGUNGEN, DRÜCKEN UND MECHANISCHEN SPANNUNGEN.

(30) Priorität : 09.08.84 DE 3429607

(43) Veröffentlichungstag der Anmeldung :
13.08.86 Patentblatt 86/33

(45) Bekanntmachung des Hinweises auf die Patenterteilung : 17.05.89 Patentblatt 89/20

(84) Benannte Vertragsstaaten :
AT BE CH DE FR GB IT LI NL SE

(56) Entgegenhaltungen :
DE—A— 1 932 899
FR—A— 2 260 093
US—A— 3 314 034

(73) Patentinhaber : Pfister GmbH
Stätzlinger Strasse 70
D-8900 Augsburg (DE)

(72) Erfinder : Oppermann, Klaus, Dr.
verstorben
(DE)

(74) Vertreter : Kahler, Kurt, Dipl.-Ing.
Patentanwälte Kahler & Käck Gerberstrasse 3 Postfach 1249
D-8948 Mindelheim (DE)

## Beschreibung

Die Erfindung betrifft einen Meßwertaufnehmer zum elektrischen Messen von Kräften, Drehmomenten, Beschleunigungen, Drücken und mechanischen Spannungen, die im Inneren des Meßwertaufnehmers in ein mechanisches Normalspannungsfeld und weiter in eine elektrische Widerstandsänderung umgewandelt werden, mit einem flächigen piezoresistiven Meßelement, das rechtwinklig zum Normalspannungsfeld angeordnet ist, das von einem Übertragungskörper auf das Meßelement übertragen wird (DE-A-1 932 899).

Derartige Meßwertaufnehmer, bei denen vorteilhafterweise der für die bekannten Meßwertaufnehmer mit Dehnungsmeßstreifen erforderliche Verformungskörper entfällt, können mit Vorteil insbesondere bei Meßaufgaben eingesetzt werden, bei denen nur eine sehr geringe Einbauhöhe zur Verfügung steht, wie z. B. bei dem Messen von Schraubenkräften. Hier soll der Aufnehmer die Form und die Abmessungen einer Unterlegscheibe haben. Ähnliche Anforderungen treten auch bei der Messung von Lagerkräften, Zerspankräften, Umformkräften, Fügekräften und Aufprallkräften auf. Kraftaufnehmer in Materialprüfmaschinen sollen eine möglichst geringe Bauhöhe aufweisen, damit die Länge des Maschinenrahmens verkürzt und somit die Gesamtsteifigkeit der Prüfmaschine gesteigert werden kann. Eine sehr geringe Bauhöhe der Aufnehmer ist ebenfalls erforderlich bei der Spannungsmessung in Beton, der Druckmessung in Höchstdruckanlagen und der Messung von Hochdruck-Schockwellen im Erdreich und von Explosions- und Detonationsdrücken in verschiedenen Medien. Bei allen dynamischen Meßaufgaben ist außerdem eine geringe Bauhöhe der Aufnehmer von großem Vorteil, da dadurch die Steifigkeit und damit die Eigenfrequenz des Aufnehmers vergrößert wird.

Seit langem sind Meßverfahren zur Ermittlung hoher statischer Drücke bekannt, bei denen sich piezoresistive Meßelemente, z. B. aus Manganindraht, in Flüssigkeiten oder Festkörpern befinden (VDI-Berichte Nr. 93, VDI-Verlag 1966, Seiten 21 bis 24 und Zeitschrift « The Review of Scientific Instruments », Jahrgang 35 (1964), Seiten 989 bis 992). Die Änderung des elektrischen Widerstands des Meßelements ist hierbei ein Maß für den Druck. Zur Messung von Hochdruck-Schockwellen werden auch Meßelemente mit Widerstandsbahnen aus Manganin verwendet, die sich in oder zwischen Festkörpern befinden. Die Richtung der zu messenden mechanischen Spannungen ist dabei rechtwinklig zur Meßelementebene (Zeitschrift « ISA Transactions », Jahrgang 7 (1968), Seiten 223 bis 230). Zur Untersuchung von tribologischen Gleit- und Rollkontaktzonen bei Bauteilen des Maschinenbaus, wie z. B. Zahnrädern, Wälz- und Gleitlagern und Nocken-Stößel-Paarungen, werden direkt auf diese Bauteile Meßelemente mittels moderner Beschichtungsverfahren, z. B. Springstrahlverdampfung, aufgebracht. Derartige Meßelemente werden zum Messen des Druckverlaufs im Schmierspalt und zum Messen der Hertzschen Flächenpressung bei direkter Berührung eingesetzt (Zeitschrift « Konstruktion », Jahrgang 32 (1980), Heft 6, Seiten 241 bis 246).

Bei der Messung hoher statischer Drücke — ungefähr ab 30 kbar — wird als Druckübertragungsmedium ein Festkörper mit kleinem Schermodul wie Pyrophyllit oder Silberchlorid verwendet. Dennoch ergeben sich oft große Meßfehler, da der Festkörper nicht wie eine reibungsfreie Flüssigkeit wirkt und sich daher im Meßelement ein quasihydrostatischer Spannungszustand einstellt, der von Messung zu Messung unterschiedlich sein kann.

Bei den Meßwertaufnehmern für Kraft und mechanische Spannung nach DE-A-1 932 899 ist bei der Ausführung mit sehr geringer Bauhöhe von großem Nachteil, daß die im Meßelement rechtwinklig zur Richtung des Normalspannungsfeldes auftretenden Querdehnungen große Meßfehler bewirken. Die Größe dieser Querdehnungen hängt ab von dem Querdehnungszustand an den Einleitungsflächen der Aufnehmer, der sich wegen der geringen Bauhöhe auch noch im piezoresistiven Meßelement auswirkt. Die an die Einleitungsflächen angrenzenden Bauteile oder Medien haben in der Regel unterschiedliche Gestalt und Werkstoffe und übertragen ihr Querdehnungsverhalten mittels Reibung auf die Einleitungsflächen der Meßwertaufnehmer. Dieses Querdehnungsverhalten kann nur in Ausnahmefällen bei der Kalibrierung der Meßwertaufnehmer berücksichtigt werden. Die Querdehnungen bewirken daher im Meßelement Widerstandsänderungen, die vom Meßaufgabe zu Meßaufgabe unterschiedlich groß sind. Reibkraftschlüssige Querdehnungsbehinderungen an den Einleitungsflächen ergeben außerdem den sog. Hysteresefehler. So können z. B. bei einem Kraftaufnehmer die Querdehnungen im Meßelement bei derselben Kraft unterschiedlich sein, je nachdem ob der Kraftwert von höheren oder von niedrigeren Kraftwerten her angefahren wurde. Werden zum stoffschlüssigen Verbinden des Meßelements mit dem Übertragungskörper organische Bindemittel verwendet, so treten wegen des Kriechverhaltens dieser Bindemittel im Meßelement bei konstanter Belastung zeitabhängige Querdehnungen auf. Dies führt z. B. bei Kraftaufnehmern für statische und quasistatische Meßaufgaben zu einer Verschlechterung der Langzeitstabilität und damit zu einer Vergrößerung des sog. Kriechfehlers. Dieser Kriecheffekt wird überlagert durch Kriecherscheinungen der Werkstoffe des Trägerkörpers und des Übertragungskörpers und durch zeitabhängige Querdehnungsveränderungen an den Einleitungsflächen der Aufnehmer.

Bei der Messung von Hertzschen Flächenpressungen, bei denen als Trägerkörper für das Meßelement das zu untersuchende Bauteil selbst benutzt wird, z. B. die Zahnflanke eines Zahnrades, können Meßfehler dadurch auftreten, daß bei der eigentlichen Messung infolge von Mischreibungszuständen in der Kontaktzone die Querdehnungen der Zahnflanke andere sind als bei der zuvor durchgeführten Kalibrierung. Die Kalibrierung erfolgt üblicherweise durch Druckbeaufschlagung der Zahnflanke mit einer reibungsfreien Flüssigkeit.

Die US-A-3 314 034 beschreibt ein Halbleiter-Dehnungsmeßstreifen-System mit mindestens zwei Halbleiter-Dehnungsmeßstreifen-Elementen, von denen eines in einen Schlitz eines zu belastenden Körpers eingelassen ist, während das andere quer dazu in Übereinanderanordnung verläuft. Die beiden Elemente sind mit einer Wheatstone'schen Brücke verbunden.

Die FR-A-2 260 093 beschreibt einen Druckaufnehmer mit einem Würfel aus Epoxitharz, dessen Oberfläche mit drei Wicklungen mit regelmäßig beabstandeten Windungen überzogen ist, wobei die drei Wicklungen zueinander senkrecht verlaufen.

Der Erfindung liegt die Aufgabe zugrunde, bei gattungsgemäßen Meßwertaufnehmern — insbesondere mit sehr geringer Bauhöhe — die Meßgenauigkeit und die Langzeitstabilität durch Ausschalten von Störeinflüßen derart zu verbessern, daß sie sowohl bei dynamischen und quasi statischen als auch bei solchen statischen Meßaufgaben eingesetzt werden können, bei denen eine sehr große Genauigkeit gefordert ist, wie z. B. in der Wägetechnik und bei der Präzisionskraftmessung.

Diese Aufgabe wird bei einem gattungsgemäßen Meßwertaufnehmer durch die kennzeichnenden Merkmale des Anspruchs 1 gelöst.

Ein Leiterbahnelement aus einem isotropen Werkstoff hat den elektrischen Widerstand

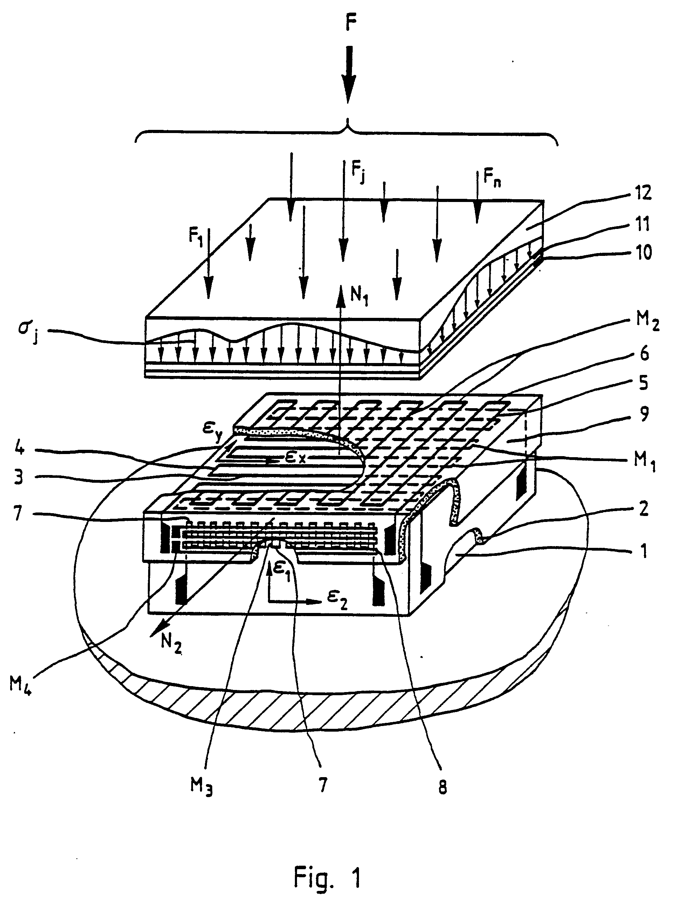

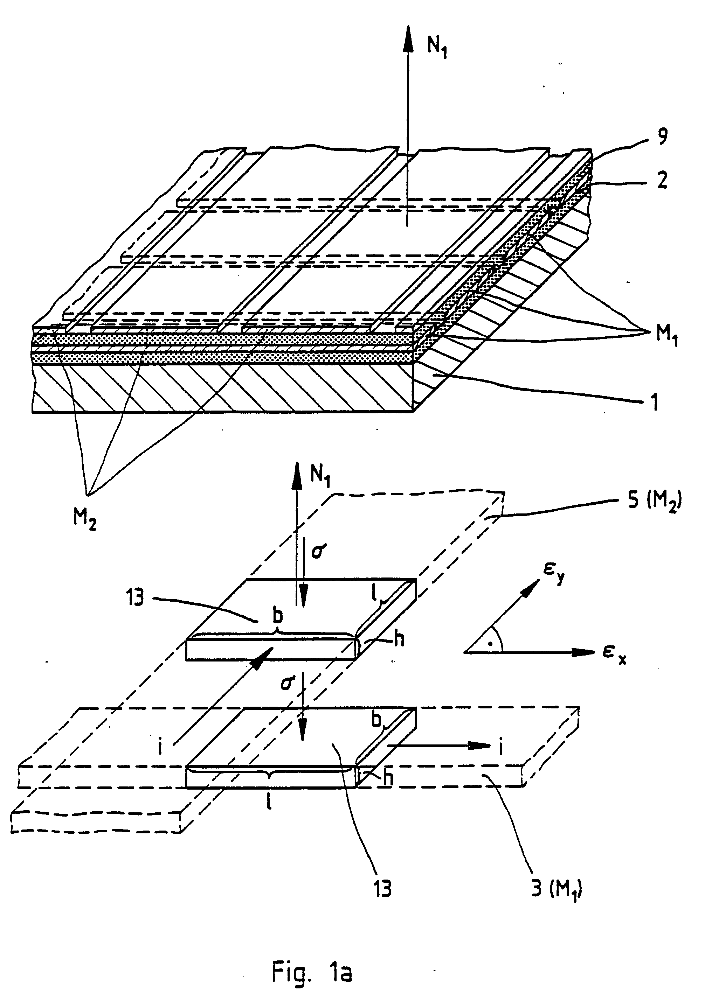

$$R = \rho \cdot \frac{l}{b \cdot h} \text{ (s. Fig. 1a)} .$$

Dabei ist $\rho$ der spezifische elektrische Widerstand, $l$ die Länge, $b$ die Breite und $h$ die Höhe des Elements. Für die piezoresistiven Meßelemente werden Widerstandswerkstoffe verwendet, die im elastischen Bereich eine lineare Beziehung zwischen der mechanischen Beanspruchung und der elektrischen Widerstandsänderung aufweisen. Die relative Widerstandsänderung ist

$$\frac{dR}{R} = \frac{d\rho}{\rho} + \frac{dl}{l} - \frac{db}{b} - \frac{dh}{h}$$

Die relative Änderung des spezifischen elektrischen Widerstands ist

$$\frac{d\rho}{\rho} = \pi_l \frac{dl}{l} + \pi_q \cdot \left( \frac{db}{b} + \frac{dh}{h} \right)$$

Hierbei sind $\pi_l$ und $\pi_q$ piezoresistive Koeffizienten. Für die Werkstoffkonstante $c$ gilt

$$c = \frac{\pi_l + 2\,\pi_q}{3}$$

Unter der Voraussetzung, daß bei den für das piezoresistive Meßelement verwendeten Widerstandswerkstoffen die piezoresistiven Koeffizienten einander gleich sind, gilt

$$c = \pi_l = \pi_q$$

In den VDI-Berichten Nr. 509, VDI-Verlag 1984, ist auf den Seiten 79 bis 83 für diesen Fall die relative Widerstandsänderung eines Leiterbahnelements infolge einer zur Richtung des Stroms transversal einwirkenden Normalspannung $\sigma$ hergeleitet.

$$\frac{dR}{R} = \frac{\sigma}{E} \cdot (c - 1) \cdot u + \left( \frac{dl}{l} + \frac{db}{b} \right) \cdot (c \cdot v + w) + \left( \frac{dl}{l} - \frac{db}{b} \right)$$

Hierin sind $u$, $v$ und $w$ die Abkürzungen

$$u = 1 - \frac{2\,\mu^2}{1 - \mu}, \quad v = \frac{1 - 2\mu}{1 - \mu} \quad \text{und} \quad w = \frac{\mu}{1 - \mu};$$

$E$ ist der Elastizitätsmodul und $\mu$ die Querkontraktionszahl des Leiterwerkstoffs.

Da die Leiterbahnen des piezoresistiven Meßelements in einer Dünnschichtanordnung stoffschlüssig mit dem Trägerkörper verbunden sind, machen sie auch dessen Dehnungen vollständig mit.

An den in Fig. 1a dargestellten Mustern, deren Bahnen sich unter einem rechten Winkel kreuzen, soll der Lösungsweg verdeutlicht werden. Betrachtet man ein Bahnelement im Muster $M_1$ (Bahn 3), das in Richtung von $\varepsilon_x$ vom Strom $i$ durchflossen wird und den Widerstand $R_1$ hat, so ist wegen $dl/l = \varepsilon_x$ und $db/b = \varepsilon_y$

$$\frac{dR_1}{R_1} = \frac{\sigma}{E} \cdot (c - 1) \cdot u + (\varepsilon_x + \varepsilon_y) \cdot (c \cdot v + w) + (\varepsilon_x - \varepsilon_y)$$

Für das darüberliegende Bahnelement im Muster $M_2$ (Bahn 5), das in Richtung von $\varepsilon_y$ vom Strom i durchflossen wird und den Widerstand $R_2$ hat, folgt wegen $dl/l = \varepsilon_y$ und $db/b = \varepsilon_x$

$$\frac{dR_2}{R_2} = \frac{\sigma}{E} \cdot (c - 1) \cdot u + (\varepsilon_y + \varepsilon_x) \cdot (c \cdot v + w) + (\varepsilon_y - \varepsilon_x)$$

Wählt man $R_1 = R_2 = R$ und schaltet z. B. beide Bahnelemente bzw. beide Muster in Reihe, dann wird die Widerstandsänderung beider Bahnelemente

$$\frac{dR_1 + dR_2}{2R} = \frac{\sigma}{E} \cdot (c - 1) \cdot u + (\varepsilon_x + \varepsilon_y) \cdot (c \cdot v + w)$$

Das Kreuzungsmuster und die Reihenschaltung der Bahnelemente bewirken also, daß die Terme, die die Differenz der orthogonalen Dehnungen $\varepsilon_x$ und $\varepsilon_y$ beinhalten, verschwinden.

Soll nun aber die Widerstandsänderung vollständig unabhängig von den örtlichen Dehnungen $\varepsilon_x$, $\varepsilon_y$ des Trägerkörpers sein, so muß auch der zweite Term in der letzten Gleichung, der die Summe der Dehnungen beinhaltet, zu Null werden. Es muß deshalb

$$c \cdot v + w = 0$$

erfüllt sein. Dies ist dann der Fall, wenn die Werkstoffkonstante c den Wert

$$c = -\frac{w}{v} = -\frac{\mu}{1 - 2\mu} \quad \text{(Bedingungsgleichung)}$$

annimmt.

Die Änderung des elektrischen Widerstands eines Leiters unter allseitigem Druck wird durch den sog. Druckkoeffizienten $\alpha_p$ des elektrischen Widerstands angegeben.

$$\frac{dR}{R} = \alpha_p \cdot p$$

Mit dieser Beziehung folgt unter Beachtung von $\sigma = -p$ und $dl/l = db/b = -(p/E) \cdot (1 - 2\mu)$ aus der Gleichung für die relative Widerstandsänderung eines Leiterbahnelements

$$\alpha_p = (1 - 3c) \cdot \frac{1 - 2\mu}{E}$$

Mit der Bedingungsgleichung für die Werkstoffkonstante c wird

$$\alpha_p = \frac{1 + \mu}{E}$$

Damit die Dehnungen des Trägerkörpers im piezoresistiven Meßelement überhaupt keine störenden Widerstandsänderungen mehr hervorrufen können, müssen also für die Widerstandsschichten Werkstoffe verwendet werden, deren Druckkoeffizient des elektrischen Widerstands gleich dem Wert $(1 + \mu)/E$ ist, wobei E der Elastizitätsmodul und $\mu$ die Querkontraktionszahl des Widerstandsmaterials sind.

Bei den hier in Betracht kommenden Werkstoffen liegt der Elastizitätsmodul E bei ca. $1{,}3 \cdot 10^5$ N/mm$^2$ und die Querkontraktionszahl $\mu$ bei ca. 1/3. Damit erhält man für den Druckkoeffizienten des elektrischen Widerstands etwa $+1 \cdot 10^{-6}$/bar. Werkstoffe mit diesem Wert des Druckkoeffizienten findet man in den VDI-Berichten Nr. 93, VDI-Verlag 1966, Seiten 21 bis 24.

Um sicherzustellen, daß alle Muster der übereinanderliegenden Widerstandsschichten die Dehnungen des Trägerkörpers vollständig mitmachen, wird nach einer Ausgestaltung der Erfindung vorgeschlagen, daß die Dünnschichtanordnung mit dem Verfahren der Kathodenzerstäubung auf den Trägerkörper aufgebracht und mit diesem stoffschlüssig verbunden wird. Hiermit lassen sich sehr dünne Schichten sehr gut haftend aufbringen, deren Verformungswiderstand gegenüber den vom Trägerkörper aufgezwungenen Dehnungen vernachlässigbar klein ist.

Nach einer weiteren Ausbildung der Erfindung wird vorgeschlagen, daß die Isolierschichten auf dem Trägerkörper und zwischen den übereinanderliegenden Mustern der Widerstandsschichten aus einem anorganischen Werkstoff, wie z. B. $Al_2O_3$ oder $SiO_2$, bestehen.

In Weiterführung des Erfindungsgedankens kann ein störender Einfluß des Summenterms der beiden Dehnungen des Trägerkörpers auf die Widerstandsänderung des Meßelements dadurch vermieden werden, daß für die Widerstandsschichten eine Kupfer-Mangan-Legierung mit etwa 0,3 bis 1 Atomprozent Mangan oder eine Silber-Mangan-Legierung mit etwa 2 bis 3 Atomprozent Mangan oder eine Gold-Chrom-Legierung mit etwa 2 Atomprozent Chrom verwendet wird.

In einer weiteren Ausgestaltung des Erfindungsgegenstandes wird ein störender Einfluß des Differenzterms der beiden Dehnungen des Trägerkörpers auf die Widerstandsänderung des Meßelements dadurch vermieden, daß an den Kreuzungsstellen der Bahnen von zwei projizierten Mustern die Tangenten der Mittellinien der Bahnen einen Winkel von vorzugsweise 90° bilden und daß — in noch weiterer Ausgestaltung der Erfindung — jeweils zwei Muster der übereinanderliegenden Widerstandsschichten elektrisch in Reihe geschaltet sind und den Widerstand in einem Zweig einer Brückenschaltung bilden.

Zur Kompensation von Störeinflüssen wird in einer noch weiteren Ausgestaltung der Erfindung vorgeschlagen, daß ein dem piezoresistiven Meßelement entsprechendes piezoresistives Kompensationselement als Widerstand einer das Meßelement und das Kompensationselement enthaltenden Brückenschaltung vorgesehen ist. Hierbei ist das Kompensationselement auf einer Fläche desselben Trägerkörpers wie das Meßelement angeordnet, die jedoch von dem Normalspannungsfeld frei ist.

Um Temperatureinflüsse auf das Meßsignal auszuschalten, wird in einer Weiterbildung des Anmeldungsgegenstands vorgeschlagen, daß die Muster, die dem Normalspannungsfeld ausgesetzt sind, den Meßelementwiderstand in einem Zweig einer Vollbrückenschaltung und die Muster, die frei von dem Normalspannungsfeld sind, den Kompensationselementwiderstand in dem benachbarten Zweig der Vollbrückenschaltung bilden. Wird der Widerstand für das Meßelement und das Kompensationselement gleich groß gewählt, so sind die temperaturbedingten Widerstandsänderungen in beiden Zweigen der Vollbrückenschaltung gleich groß und heben sich in ihrer Wirkung auf das Meßsignal auf.

Um bei gleicher Größe der Normalspannung die Größe des Meßsignals im Vergleich zu der oben genannten Brückenschaltung zu verdoppeln und dabei ebenfalls Temperatureinflüsse auf das Meßsignal auszuschalten, wird nach einer weiteren Ausbildung der Erfindung vorgeschlagen, daß von der Anzahl der Muster, die dem Normalspannungsfeld ausgesetzt sind, die eine Hälfte in einem Zweig einer Vollbrückenschaltung und die andere Hälfte in dem dazu diametral gelegenen Zweig je einen Meßelementwiderstand bildet und daß von der Anzahl der Muster, die frei von dem Normalspannungsfeld sind, die eine Hälfte in einem weiteren Zweig der Vollbrückenschaltung und die andere Hälfte in dem dazu diametral gelegenen Zweig je einen Kompensationselementwiderstand bildet. Sind für das Meßelement und das Kompensationselement z. B. jeweils zwei übereinanderliegende Muster mit gleich grossem Widerstand vorhanden, deren Projektion in Richtung der Flächennormale ein Kreuzungsmuster bildet, so wird jeweils ein Muster in einem Zweig und das darüberliegende Muster in dem diametral gelegenen Zweig der Vollbrücke verschaltet. Die Verschaltung der Muster sowohl für das Meßelement als auch für das Kompensationselement in diametralen Zweigen der Vollbrücke verhindert eine Auswirkung des Differenzgliedes der beiden orthogonalen Dehnungen auf das Meßsignal, da sich hierbei gleich große Widerstandsänderungen mit entgegengesetzten Vorzeichen in ihrer Wirkung auf das Meßsignal aufheben.

Damit zur Senkung der Herstellungskosten die gleichzeitige Herstellung von zwei Widerstandsschichten in einem Beschichtungsprozeß erfolgen kann, wird nach einer weiteren Ausbildung der Erfindung vorgeschlagen, daß eine der zwischen den Widerstandsschichten befindlichen Isolierschichten der elektrisch isolierende Trägerkörper selbst ist.

Es wird in einer weiteren Ausgestaltung des Erfindungsgegenstandes vorgeschlagen, daß der isolierende Trägerkörper entweder vollständig aus Isoliermaterial, z. B. Oxidkeramik, oder aus einer beidseitig mit Isolierschichten beschichteten Metallfolie oder -platte besteht.

Um Unebenheiten des Trägerkörpers und des Übertragungskörpers auszugleichen und damit die ganzflächige Übertragung des Normalspannungsfeldes in das Meßelement zu ermöglichen, wird in einer noch weiteren Ausbildung der Erfindung vorgeschlagen, daß sich zwischen dem obersten Muster des Meßelements und dem Übertragungskörper eine Isolierschicht befindet, die aus einer Schicht aus einem anorganischen Werkstoff und/oder einer Zwischenschicht aus einem organischen Werkstoff besteht. Das oberste Muster des Meßelements kann z. B. zunächst mit einer relativ harten Isolierschicht aus $Al_2O_3$ beschichtet sein, auf die eine relativ weiche Kunststoffschicht, z. B. Parylene, aufgetragen wird.

Nach einer weiteren Ausbildung der Erfindung wird vorgeschlagen, daß die Isolierschicht das oberste Muster des Meßelements mit dem Übertragungskörper stoffschlüssig verbindet. Hierzu kann z. B. ein dünner Klebfilm aus Epoxidharz verwendet werden.

Zum Messen von Drücken in verschiedenen Medien, von Spannungen in Festkörpern, z. B. Beton, und von Flächenpressungen zwischen Festkörpern wird in einer noch weiteren Ausgestaltung der Erfindung vorgeschlagen, daß die Isolierschicht als Übertragungskörper fungiert. Dadurch wird die Masse des Übertragungskörpers sehr gering und die Eigenfrequenz des Meßwertaufnehmers sehr groß, so daß z. B. Druckverläufe mit extrem kurzen Anstiegszeiten gut erfaßt werden können.

Nach einer noch weiteren Ausbildung der Erfindung wird vorgeschlagen, daß der Übertragungskörper ein die Kraft, den Druck oder die mechanische Spannung in den Meßwertaufnehmer einleitendes Medium oder ein Einleitungskörper ist. Derartige Meßwertaufnehmer zeichnen sich durch eine besonders flache Bauweise aus und können z. B. als Klopfsensoren in der Zylinderkopfdichtung von Verbrennungsmotoren zum Erfassen unerwünschter Druckspitzen des Verbrennungsvorgangs eingesetzt werden. Die Dichtmasse der Zylinderkopfdichtung ist hierbei der Übertragungskörper.

In einer weiteren Ausbildung der Erfindung wird vorgeschlagen, daß die vom Meßelement und vom Kompensationselement jeweils bedeckten Flächen des Trägerkörpers im wesentlichen gleich sind.

Dadurch wird kapazitive Symmetrie beim Meßelement und beim Kompensationselement erreicht, was von Vorteil bei einer Speisung der Brückenschaltung mit Trägerfrequenzwechselspannung ist.

Die mit der Erfindung erzielten Vorteile bestehen insbesondere darin, daß der Meßwertaufnehmer vielfältig überall dort eingesetzt werden kann, wo nur eine sehr geringe Einbauhöhe für den Aufnehmer zur Verfügung steht und sehr kleine Fehlergrenzen und sehr gute Langzeitstabilität erforderlich sind.

Als besonderer Vorteil erscheint, daß anstatt teurer kriecharmer Werkstoffe, wie z. B. hochlegierte Vergütungsstähle, auch billige Werkstoffe für den Trägerkörper und den Übertragungskörper verwendet werden können, da sich zeitunabhängige und zeitabhängige Querdehnungen der Körper nicht im Meßsignal auswirken. Auch temperaturbedingte Änderungen der Abmessungen der Körper sowohl infolge der Wärmeausdehung als auch infolge der Änderung der Elastizitätsmoduli der Werkstoffe führen zu keiner das Meßsignal beinträchtigenden Widerstandsänderung bei dem Meßelement und dem Kompensationselement. Bei der Gestaltung und der Werkstoffwahl für die Einleitungskörper zur Einleitung der zu messenden Größe in die Meßwertaufnehmer ist man frei. Weiter können beliebige Medien auf den Meßwertaufnehmer einwirken, auch solche mit großer innerer Reibung, da sich unterschiedliche Querdehnungen an den Einleitungsflächen der Meßwertaufnehmer ebenfalls nicht im Meßsignal auswirken.

Die Fehlergrenzen der Meßwertaufnehmer sind so klein, daß Präzisionsmessungen möglich sind, die insbesondere in der Wägetechnik gefordert sind.

Die Erfindung läßt sich für Kraft-, Drehmoment-, Beschleunigungs- und Spannungsaufnehmer gleichermaßen gut einsetzen; sie wird anhand von 6 Figuren, die verschiedene Ausführungsbeispiele darstellen, näher erläutert. Es zeigt

Fig. 1 in perspektivischer Darstellung, teilweise explodiert und aufgebrochen, einen Kraftaufnehmer mit stoffschlüssig auf dem Trägerkörper angeordneten Mustern, wobei zum Verdeutlichen des Erfindungsgedankens die Bahnen der Muster sehr schmal und die Isolierschichten sehr dick dargestellt sind,

Fig. 1a einen Ausschnitt der übereinanderliegenden Muster des piezoresistiven Meßelements aus Fig. 1 mit Lupendarstellung einer Kreuzungsstelle zweier Bahnen, bei der — aus Gründen der Übersichtlichkeit — die Isolierschichten in der Lupendarstellung weggelassen sind,

Fig. 1b die mit den Mustern geschaltete halbe Vollbrücke im Schaltbild,

Fig. 1c die mit den Mustern von Meßelement und Kompensationselement geschaltete ganze Vollbrücke im Schaltbild,

Fig. 2 einen ringförmigen Kraftaufnehmer im Längsschnitt,

Fig. 3 einen Schnitt gemäß Linie AA durch Fig. 2,

Fig. 4 einen Ausschnitt aus einem Spannungssensor,

Fig. 4a eine Variante zu Fig. 4,

Fig. 5 einen Druck- oder Spannungsaufnehmer, der vollständig von dem Medium, in dem er messen soll, umgeben ist und

Fig. 6 einen Ausschnitt aus einem Universalaufnehmer für Kraft, Drehmoment, Beschleunigung, Druck und mechanische Spannung.

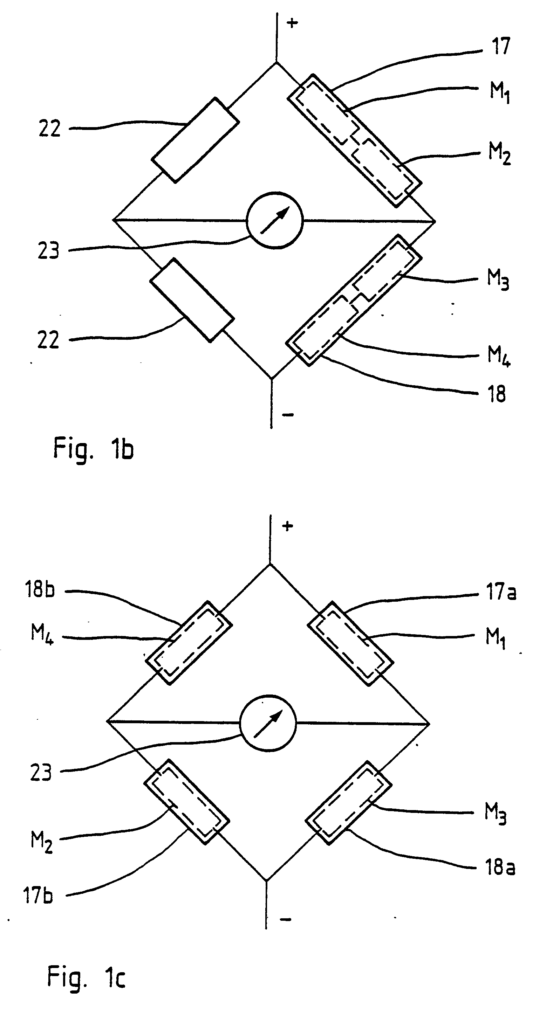

Der in Fig. 1 gezeigte Kraftaufnehmer besteht aus dem Trägerkörper 1 mit der Dünnschichtanordnung 2, $M_1$, $M_3$, 9, $M_2$, $M_4$, 10, 11 und dem Übertragungskörper 12. Der Trägerkörper 1 ist mit der Isolierschicht 2 beschichtet, auf der sich die das piezoresistive Meßelement bildenden Muster $M_1$ und $M_2$ und die das Kompensationselement bildenden Muster $M_3$ und $M_4$ und die zwischen den Mustern $M_1$ und $M_2$ bzw. $M_3$ und $M_4$ angeordnete Isolierschicht 9 befindet. Stoffschlüssig auf dem Muster $M_2$ befindet sich eine Isolierschicht, die aus einer Schicht 10 aus einem anorganischen Werkstoff und einer Zwischenschicht 11 aus einem organischen Werkstoff besteht. Die Schicht 11 verbindet die Schicht 10 stoffschlüssig mit dem Übertragungskörper 12, an dem mit beliebiger Kraftverteilung $F_j$ die zu messende Kraft F angreift. Es ist $F = F_1 + ... + F_j + ... + F_n$. Der Übertragungskörper 12 wandelt die Kraftverteilung $F_j$ in ein Normalspannungsfeld $\sigma_j$ um, das mittels der Schichten 10 und 11 auf das Meßelement übertragen wird.

Der in Fig. 1a dargestellte Ausschnitt aus dem Meßelement zeigt die Bahnen 3 und 5 der Muster $M_1$ und $M_2$, die in Richtung der Flächennormale $N_1$ ein Kreuzungsmuster bilden. In der Lupendarstellung sind in jeder Bahn die viereckigen Flächenelemente 13 zu erkennen, die durch die Projektionen der Bahnen 3 und 5 aufeinander — in Richtung der Flächennormale $N_1$ — entstehen. Die in Richtung der Flächennormale $N_1$ von dem Übertragungskörper 12 und den Schichten 10 und 11 auf die Kreuzungsstelle übertragene Normalspannung $\sigma$ ist auf beiden Flächenelementen 13 gleich groß, da die Schichten sehr dünn sind. Die Spannung $\sigma$ wirkt senkrecht zur Richtung des Stromes i. Die Flächenelemente 13 machen die örtlichen Dehnungen $\varepsilon_x$ und $\varepsilon_y$ des Trägerkörpers 1 vollständig mit. Werden die betrachteten Bahnelemente der Bahnen 3 und 5 z. B. in einem Zweig einer Brückenschaltung in Reihe geschaltet, so können ihre durch die Dehnungsdifferenz $(\varepsilon_x - \varepsilon_y)$ verursachten Widerstandsänderungen $dR_3$ und $dR_5$ vollständig kompensiert werden. Hierzu ist Voraussetzung, daß ihre Widerstände $R_3$ und $R_5$ gleich groß sind. Dies wird auch bei unterschiedlichem ohmschen Flächenwiderstand der Muster $M_1$ und $M_2$ dadurch erreicht, daß z. B. durch Wahl der Bahnbreite b der Bahn 5 die Länge l des Flächenelements 13 in der Bahn 3 festgelegt wird. Mit $R_3 = R_5$ wird $dR_3 = -dR_5$, da $dR_3 = (\varepsilon_x - \varepsilon_y) \cdot R_3$ und $dR_5 = (\varepsilon_y - \varepsilon_x) \cdot R_5$ sind.

Aus dem Schaltbild in Fig. 1b erkennt man, daß die Muster $M_1$ und $M_2$ in einem Zweig einer Brückenschaltung in Reihe geschaltet sind und den Meßelementwiderstand 17 bilden. In dem Muster $M_1$ befindet sich eine Vielzahl von Bahnelementen der Bahnen 3, die alle einer unterschiedlichen örtlichen Normalspannung $\sigma$ und einem unterschiedlichen örtlichen Dehnungspaar $\varepsilon_x$, $\varepsilon_y$ ausgesetzt sein können. Da an den Kreuzungsstellen jedem Bahnelement im Muster $M_1$ ein in Richtung der Flächennormale $N_1$ örtlich zugeordnetes Bahnelement der Bahnen 5 im Muster $M_2$ entspricht, kann auch hier eine vollständige Kompensation der durch die Differenz $(\varepsilon_x - \varepsilon_y)$ der örtlichen Dehnungspaare in den Bahnen 3 und 5 verursachten Widerstandsänderungen erreicht werden. Die gleiche Kompensation ist auch für die im benachbarten Brückenzweig angeordneten Muster $M_3$ und $M_4$ des Kompensationselements möglich, die den örtlich verschiedenen Dehnungspaaren $\varepsilon_1$, $\varepsilon_2$ ausgesetzt sind. Die Muster $M_3$ und $M_4$ sind in Reihe geschaltet und bilden den Kompensationselementwiderstand 18. Die Widerstände 22 sind externe Ergänzungswiderstände der Brückenschaltung.

Aus dem Schaltbild in Fig. 1c erkennt man, daß die Muster $M_1$ und $M_2$ bzw. $M_3$ und $M_4$ diametral in einer Vollbrücke geschaltet sind. Auch hier ist eine vollständige Kompensation der durch die örtlichen Differenzen $(\varepsilon_x - \varepsilon_y)$ bzw. $(\varepsilon_1 - \varepsilon_2)$ hervorgerufenen Widerstandsänderungen möglich. Da diese Widerstandsänderungen im Muster $M_1$ und im Muster $M_2$ gleich groß, aber von entgegengesetztem Vorzeichen sind, bewirken sie am Meßinstrument 23 keine Veränderung. Die hierbei durch die Widerstandsänderungen hervorgerufene Stromänderung in den Brückenzweigen kann vernachlässigt werden, da dR sehr viel kleiner als R ist. Die gleiche Betrachtung gilt auch für die Muster $M_3$ und $M_4$. Da die Muster $M_1$ und $M_2$ diametral geschaltet, aber durch die Normalspannung $\sigma$ gleichsinnig beansprucht sind, erhält man gegenüber der Schaltung in Fig. 1b vorteilhafterweise ein doppelt so großes Meßsignal.

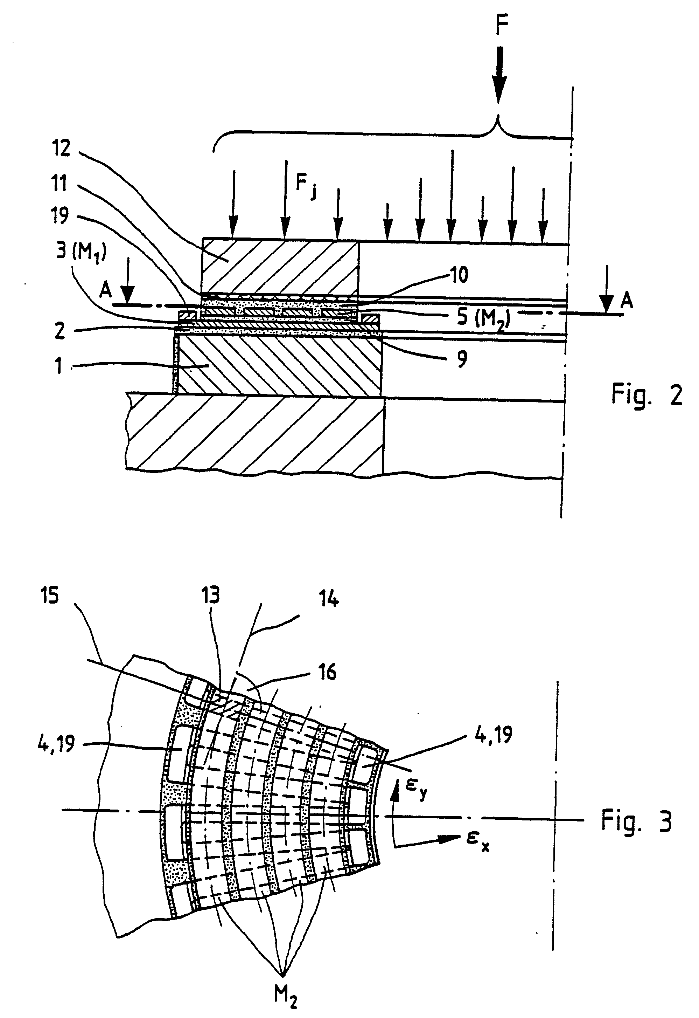

Das in Fig. 2 gezeigte Ausführungsbeispiel stellt einen ringförmigen Kraftaufnehmer dar, auf dessen Übertragungskörper 12 die zu messende Kraft F mit in radialer und in Umfangsrichtung beliebiger Kraftverteilung $F_j$ einwirkt.

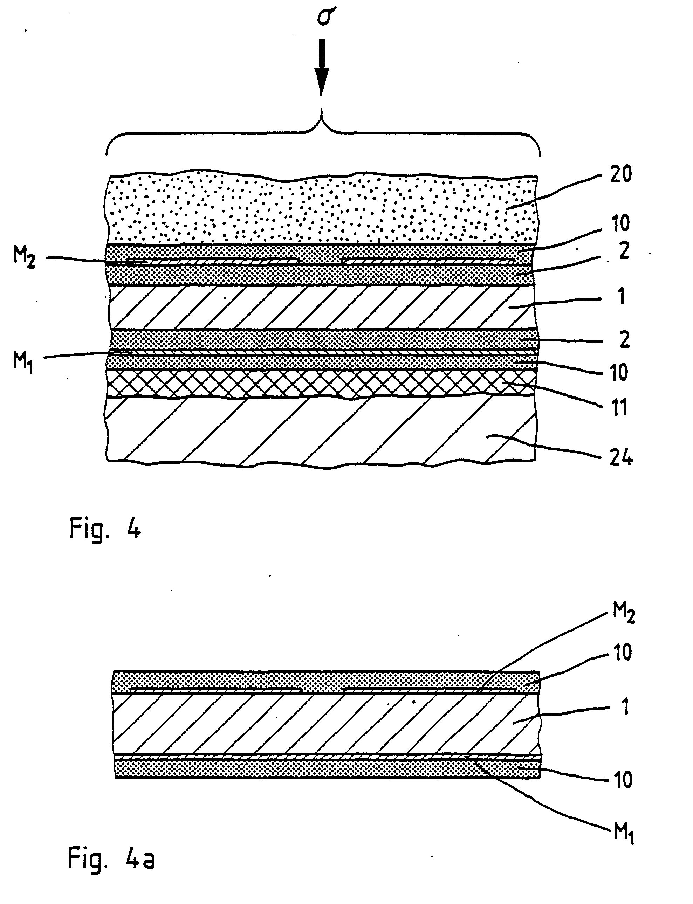

In Fig. 3 ist der Verlauf der kreisförmigen Bahnen 5 in Umfangsrichtung und der Verlauf der geraden Bahnen 3 in radialer Richtung zu sehen. An den Kreuzungsstellen der Bahnen 3 und 5 kreuzt die Tangente 14 der Mittellinie der Bahn 5 die Tangente 15 der Mittellinie der Bahn 3 unter dem rechten Winkel 16. In diesem Fall fällt die Mittellinie der Bahn 3 mit der Tangente 15 zusammen. Es entsteht durch Projektion in beiden Bahnen das schraffierte Flächenelement 13, auf das die örtliche Normalspannung $\sigma$ und das örtliche Dehnungspaar $\varepsilon_x$, $\varepsilon_y$ einwirken. Die außerhalb des Normalspannungsbereichs angeordneten Verbindungsstellen 4 der Bahnen 3 sind mit einer sehr niederohmigen Verstärkungsschicht 19, z. B. Gold, versehen. Hierdurch wird der Flächenwiderstand der Verbindungsstelle gegenüber dem der Bahn 3 wesentlich verkleinert. Dadurch werden Empfindlichkeitsverluste beim Meßelement infolge der Verbindungsstellen weitgehend vermieden.

In Fig. 4 ist als Ausführungsbeispiel ein Spannungssensor gezeigt, bei dem der Trägerkörper 1 als Metallfolie ausgebildet und beidseitig mit der Isolierschicht 2 beschichtet ist. Der Trägerkörper übernimmt hier die Funktion der Isolierschicht 9 zwischen den Mustern $M_1$ und $M_2$. Auf den Mustern $M_1$ und $M_2$ befindet sich die Isolierschicht 10, die aus einem anorganischen Werkstoff besteht. Der Sensor befindet sich mit der Zwischenschicht 11 auf dem Bauteil 24, z. B. dem Flansch eines Verbrennungsmotorgehäuses. Die Schicht 11 besteht aus einem organischen Werkstoff, der Unebenheiten und Rauheiten der Bauteiloberfläche ausgleicht. Die Spannung $\sigma$ wird durch das Medium 20, z. B. die Dichtmasse der Zylinderkopfdichtung eines Verbrennungsmotors, auf den Sensor übertragen. Das Medium 20 übernimmt hier die Funktion der Zwischenschicht 11 und des Übertragungskörpers 12. Die Muster $M_3$ und $M_4$ des Kompensationselements (nicht dargestellt) sind frei von dem Medium 20.

In Fig. 4a ist eine Variante der in Fig. 4 gezeigten Ausführung dargestellt. Der Trägerkörper 1 besteht hierbei vollständig aus Isoliermaterial.

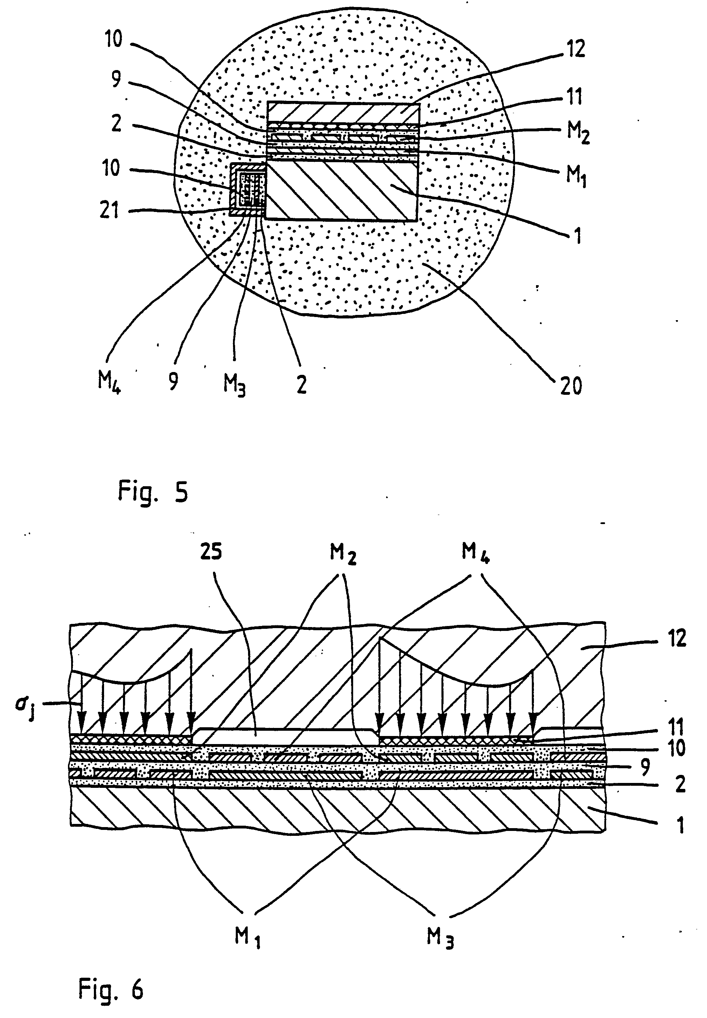

Das in Fig. 5 gezeigte Ausführungsbeispiel stellt einen Druck- oder Spannungsaufnehmer dar, der vollständig von dem Medium 20 umgeben ist, in dem er den Druck oder die Spannung messen soll. Das Medium 20 kann hierbei z. B. eine Hydraulikflüssigkeit, Gummi, Beton oder Erdreich sein. Das Kompensationselement ist auf einer Fläche des Trägerkörpers 1 angebracht, die senkrecht zu derjenigen Fläche ist, auf das der Meßelement angeordnet ist. Die Fläche des Trägerkörpers, auf der die Muster $(M_3, M_4)$ für das Kompensationselement angeordnet sind, wird durch die druckdichte Schutzkapsel 21 von der Einwirkung des Normalspannungsfeldes abgeschirmt. Die Schutzkapsel kann hierbei z. B. durch Löten oder Schweißen druckdicht mit dem Trägerkörper verbunden sein und druckdichte Glasdurchführungen für die elektrischen Anschlüsse der Muster $M_3$ und $M_4$ beinhalten.

In Fig. 6 ist als Ausführungsbeispiel ein Universalaufnehmer für Kraft, Drehmoment, Beschleunigung, Druck und mechanische Spannung gezeigt, bei dem die vom Meßelement und vom Kompensationselement jeweils bedeckten Flächen des Trägerkörpers 1 in der gleichen Ebene liegen. Die dem Meßelement zugewandte Fläche des Übertragungskörpers 12 weist die flächigen Vertiefungen 25 auf, die einem zugeordneten Kompensationselement gegenüberliegen. Dadurch wird das Kompensationselement von dem Normalspannungsfeld $\sigma_j$ freigehalten. Die von den Mustern $M_1$, $M_2$ des Meßelements und von den Mustern $M_3$, $M_4$ des Kompensationselements jeweils bedeckten Flächen des Trägerkörpers sind im wesentlichen gleich groß. Dies ist von Vorteil bei der Speisung der Brückenschaltung mit Wechselspannung, da dadurch die kapazitiven Einflüsse beim Meßelement und beim Kompensationselement gleich groß sind und sich in ihrer Wirkung auf das Meßsignal kompensieren.

## Patentansprüche

1. Meßwertaufnehmer zum elektrischen Messen von Kräften, Drehmomenten, Beschleunigungen, Drücken und mechanischen Spannungen, die im Inneren des Meßwertaufnehmers in ein mechanisches Normalspannungsfeld und weiter in eine elektrische Widerstandsänderung umgewandelt werden, mit einem flächigen piezoresistiven Meßelement, das rechtwinklig zum Normalspannungsfeld angeordnet ist, das von einem Übertragungskörper (12) auf das Meßelement übertragen wird, dadurch gekennzeichnet,

daß das Meßelement in Richtung des Normalspannungsfeldes zwei übereinanderliegende Widerstandsschichten mit einer zwischen diesen befindlichen Isolierschicht (9) aufweist,

daß jede Widerstandsschicht ein flächenhaftes Muster (M1, M2) aufweist, wobei die Projektion der Muster ein Kreuzungsmuster bildet und dadurch in jeder Bahn der beiden Muster Flächenelemente (13) gleichen Flächeninhalts gebildet werden,

daß die Flächenelemente (13) jeweils beide orthogonalen Dehnungen des Trägerkörpers (1) vollständig mitmachen,

daß die Muster zu Widerständen einer Brückenschaltung verbunden sind und der elektrische Strom (i) in dem einen Muster (M1) in Richtung der einen Dehnung und in dem darüberliegenden Muster (M2) in Richtung der anderen Dehnung fließt.

2. Meßwertaufnehmer nach Anspruch 1, dadurch gekennzeichnet, daß das Widerstandsmaterial der Muster (M1, M2) derart gewählt ist, daß die Widerstandsänderung des Meßelements infolge des zu messenden Normalspannungsfeldes weitgehend von einer mechanischen Beanspruchung des Meßelements infolge der orthogonalen Dehnungen des Trägerkörpers (1) unbeeinflußt bleibt.

3. Meßwertaufnehmer nach Anspruch 1 oder 2, dadurch gekennzeichnet, daß die Werkstoffkonstante als $c = \mu/(1 - 3\mu)$ gewählt wird, wobei die $\mu$ die Querkontraktionszahl des Widerstandsmaterials ist.

4. Meßwertaufnehmer nach Anspruch 3, dadurch gekennzeichnet, daß $\alpha_p = (1 + \mu)/E$ gewählt wird, wobei E der Elastizitätsmodul des Widerstandsmaterials ist.

5. Meßwertaufnehmer nach einem der Ansprüche 1 bis 4, dadurch gekennzeichnet, daß zur Kompensation von Störeinflüssen ein dem piezoresistiven Meßelement ($M_1$, $M_2$) entsprechendes piezoresistives Kompensationselement ($M_3$, $M_4$) als Widerstand einer das Meßelement und das Kompensationselement enthaltenden Brückenschaltung (17, 18, 22, 23) vorgesehen ist, wobei das Kompensationselement auf einer Fläche desselben Trägerkörpers wie das Meßelement angeordnet ist, die jedoch von dem Normalspannungsfeld frei ist, wobei das Kompensationselement in der gleichen Ebene liegt wie das Meßelement oder in einer dazu senkrechten Ebene.

6. Meßwertaufnehmer nach Anspruch 5, dadurch gekennzeichnet, daß die dem Meßelement zugewandte Fläche des Übertragungskörpers (12) mit mindestens einer flächigen Vertiefung (25) versehen ist, die einem zugeordneten Kompensationselement gegenüberliegt und dieses vom Normalspannungsfeld freihält.

7. Meßwertaufnehmer nach einem der vorhergehenden Ansprüche, dadurch gekennzeichnet, daß das piezoresistive Meßelement ($M_1$, $M_2$) und das piezoresistive Kompensationselement ($M_3$, $M_4$) eine mittels Kathodenzerstäubung auf dem Trägerkörper (1) aufgebrachte und mit diesem stoffschlüssig verbundene Dünnschichtanordnung ist.

8. Meßwertaufnehmer nach einem der vorhergehenden Ansprüche, dadurch gekennzeichnet, daß die viereckigen Flächenelemente (13) in jeder Bahn von zwei projizierten Mustern — bezogen auf die Stromrichtung — ein solches Verhältnis von Länge (l) zur Breite (b) aufweisen, daß das Produkt aus dem ohmschen Flächenwiderstand (Quadratwiderstand) der jeweiligen Widerstandsschicht und diesem Verhältnis in beiden Mustern gleich ist.

9. Meßwertaufnehmer nach einem der Ansprüche 1 bis 7, dadurch gekennzeichnet, daß an den Kreuzungsstellen der Bahnen von zwei projizierten Mustern ($M_1$, $M_2$ bzw. $M_3$, $M_4$) die Tangenten (14, 15) der Mittellinien der Bahnen einen Winkel (16) von 90° bilden.

10. Meßwertaufnehmer nach einem der vorhergehenden Ansprüche, dadurch gekennzeichnet, daß die Muster ($M_1$, $M_2$, $M_3$, $M_4$) des Meßelements bzw. der Kompensationselements auf die vier Zweige einer Vollbrückenschaltung insbesondere für eine Temperaturkompensation verteilt werden.

11. Meßwertaufnehmer nach Anspruch 10, dadurch gekennzeichnet, daß die eine Hälfte der Muster ($M_1$) des Meßelements, in dem einen Zweig und die andere Hälfte der Muster ($M_2$) des Meßelements in dem dazu diametral gelegenen Zweig, die eine Hälfte der Muster ($M_3$) des Kompensationselements in einem weiteren Zweig und die andere Hälfte der Muster ($M_4$) des Kompensationselements in dem dazu diametral gelegenen Zweig einer Vollbrückenschaltung angeordnet sind.

12. Meßwertaufnehmer nach einem der vorhergehenden Ansprüche, dadurch gekennzeichnet, daß eine der zwischen den Mustern ($M_1$, $M_2$ bzw. $M_3$, $M_4$) befindlichen Isolierschichten (9) der mit der Isolierschicht (12) versehene Trägerkörper (1) ist, der bevorzugt entweder aus Isoliermaterial besteht oder aus einer beidseitig mit Isolierschichten (2) beschichteten Metallfolie oder -platte.

13. Meßwertaufnehmer nach einem der vorhergehenden Ansprüche, dadurch gekennzeichnet, daß zwischen dem Übertragungskörper (12) und der Isolierschicht (10) eine Zwischenschicht (11) aus einem organischen Werkstoff angeordnet ist, die bevorzugt das oberste Muster ($M_2$) des Meßelements mit dem Übertragungskörper (12) stoffschlüssig verbindet.

14. Meßwertaufnehmer nach einem der vorhergehenden Ansprüche, dadurch gekennzeichnet, daß

8

der Trägerkörper (1) ein Bauteil einer Maschine, einer tribologischen Untersuchungseinrichtung, eines Behälters, eines Rohres oder einer Armatur ist und daß der Übertragungskörper (12) ein die Kraft, das Drehmoment, die Beschleunigung, den Druck oder die mechanische Spannung in dem Meßwertaufnehmer einleitender Festkörper oder ein einleitendes Medium (20) ist.

## Claims

1. Transducer for the electrical measurement of forces, torques, accelerations, pressures and mechanical stresses converted in the interior of the transducer into a normal mechanical stress field and further into an electrical resistance change, including an areal piezo-resistive measuring element arranged perpendicular in respect of the normal stress field the stress field being transmitted to the measuring element through a transmission body (12), characterized in

that the measuring element comprises in the direction of the normal stress field two overlying resistive layers with an insulating layer (9) therebetween ;

that each resistive layer comprises an areal pattern (M1, M2) the projections of the patterns forming a grid pattern, whereby in each lane of the two patterns plane elements 13 of equal area are formed ;

that the plane elements 13 completely follow the two perpendicular strains each ;

that the patterns are connected to resistors of a bridge circuit and the electrical current (i) flows in the one (M1) of the patterns in the direction of the one strain and in the overlying pattern (M2) in the direction of the other strain.

2. Transducer of claim 1, wherein the resistive material of the patterns (M1, M2) is selected such that a change in resistance of the measuring element due to the application of the normal stress field to be measured remains essentially unaffected by a mechanical strain of the measuring element caused by the perpendicular strains of the carrier body (1).

3. Transducer of claim 1 or 2, wherein the material the constant c is selected $c = \mu/(1-2\mu)$ where is the Poisson's ratio of the resistive material.

4. Transducer of claim 3, wherein p is selected $\alpha p = (1 + \mu)/E$ where E is the Young's modulus of the resistive material.

5. Transducer of any of the claims 1 to 4 wherein for compensating interferences a piezo-resistive compensation element ($M_3$, $M_4$) corresponding to the piezo-resistive measuring element ($M_1$, $M_2$) is provided as a resistor in a bridge circuit (17, 18, 22, 23) including the measuring element and the compensation element, the compensation element being arranged on a surface of said carrier body, however, free from the influence of the normal stress field such that the compensation element extends in the same plane as the measuring element or in a plane perpendicular thereto.

6. Transducer of claim 5, wherein the surface of the transmission body (12) facing the measuring element is provided with at least an areal recess (25) opposing an associated compensation element and keeping the latter free from the normal stress field.

7. Transducer of any of the preceding claims, wherein the piezo-resistive measuring element ($M_1$, $M_2$) and the piezo-resistive compensation element ($M_3$, $M_4$) are formed as a thin film arrangement applied by cathode sputtering onto the carrier body (1) and firmly attached thereto.

8. Transducer of any of the preceding claims, wherein the quadrangular area elements (13) in each lane of two projected patterns — in respect of the current direction — have such a ratio of length (l) to width (b) that the product of the ohmic are a resistance (square resistance) of each resistive layer by that ratio is the same in the two patterns.

9. Transducer of any of the claims 1 to 7, wherein at crossing points of the lanes of the two projected patterns ($M_1$, $M_2$ and $M_3$, $M_4$, respectively) the tangents (14, 15) of the centre lines of the lanes form an angle (16) of 90°.

10. Transducer of any of the preceding claims, wherein the patterns ($M_1$, $M_2$, $M_3$, $M_4$) of the measuring element and the compensation element, respectively, are distributed to four branches of a full bridge circuit, in particular for a temperature compensation.

11. Transducer of claim 10, wherein the one half of the pattern ($M_1$) of the measuring element is arranged in the one branch and the other half of the pattern ($M_2$) of the measuring element in the diametrally opposite branch, the one half of the pattern ($M_3$) of the compensation element in a further branch and the other half of the pattern ($M_4$) of the compensation element in the diametrally opposite branch of a full bridge circuit.

12. Transducer of any of the preceding claims wherein one of the insolating layers arranged between the patterns ($M_1$, $M_2$ and $M_3$, $M_4$, respectively) is the carrier body (1) provided with the insolating layer (12) and preferably formed of insulating material or of a metal foil or plate coated on both surfaces with insulating layers (2).

13. Transducer of any of the preceding claims, wherein there is provided between the transmission body (12) and the insolating layer (10) an intermediate layer (11) of organic material firmly connecting preferably the upper pattern ($M_2$) of the measuring element to the transmission body (12).

14. Transducer of any of the preceding claims, wherein the carrier body (1) is an element of a machine, a tribologic testing apparatus, a container, a tube or an instrument and that the transmission body (12) is a rigid body introducing the force, the torque, the acceleration, the pressure or the mechanical strain into the transducer or an introducing medium (20).

## Revendications

1. Capteur pour la mesure électrique de forces, couples de rotation, accélérations, pressions et contraintes mécaniques qui sont transformés, à l'intérieur du capteur, en un champ de contrainte mécanique normale, et ensuite en une modification de résistance électrique, avec un élément de mesure piézorésistif plat, qui est disposé à angle droit par rapport au champ de contrainte normale qui est transféré à l'élément de mesure par un élément de transfert (12), caractérisé en ce que,

l'élément de mesure présente dans la direction du champ de contrainte normale, deux couches résistives superposées avec une couche d'isolation entre elles,

chaque couche résistive présente un dessin collé en surface (M1, M2), la projection des dessins formant un dessin croisé et des éléments de surface (13) de même superficie étant ainsi formés dans chaque bande des deux dessins,

les éléments de surface (13) suivent complètement l'allongement du corps support (1) dans les deux directions orthogonales,

les dessins sont connectés aux résistances d'un montage en pont, et le courant électrique (i) passe dans un des dessins (M1) dans le sens d'un allongement, et dans le dessin superposé (M2) dans le sens de l'autre allongement.

2. Capteur selon la revendication 1, caractérisé en ce que le matériau résistif des dessins (M1, M2) a été sélectionné de manière telle que la modification de résistance de l'élément de mesure suite au champ de contrainte normale à mesurer, reste en substance à l'abri d'une sollicitation mécanique de l'élément de mesure en raison des allongements orthogonaux du corps support (1).

3. Capteur selon la revendication 1 ou 2, caractérisé en ce que la constante de la matière est choisie comme étant $c = \mu/(1 - 2\mu)$, où $\mu$ est l'indice de contraction transversale du matériau résistif.

4. Capteur selon la revendication 3, caractérisé en ce que l'on choisit $\alpha_p = (1 + \mu)/E$, E étant le module d'élasticité du matériau résistif.

5. Capteur selon une des revendications 1 à 4, caractérisé en ce que, pour la compensation des influences perturbatrices, un élément de compensation piézorésistif ($M_3$, $M_4$) correspondant à l'élément de mesure piézorésistif ($M_1$, $M_2$) est prévu comme résistance d'un montage en pont comportant l'élément de mesure et l'élément de compensation (17, 18, 22, 23), l'élément de compensation étant disposé sur une surface du même corps support que l'élément de mesure, qui est toutefois libre du champ de contrainte normale, l'élément de compensation se trouvant dans le même plan que l'élément de mesure ou dans un plan qui lui est perpendiculaire.

6. Capteur selon la revendication 5, caractérisé en ce que la surface du corps de transfert (12) tournée vers l'élément de mesure est pourvue d'au moins un enfoncement superficiel (25) qui est opposé à un élément de compensation correspondant, et maintient celui-ci libre du champ de contrainte normale.

7. Capteur selon une des revendications qui précèdent, caractérisé en ce que l'élément de mesure piézorésistif ($M_1$, $M_2$) et l'élément de compensation piézorésistif ($M_3$, $M_4$) est un ensemble à couches minces disposé sur le corps support par pulvérisation cathodique et combiné intimement avec celui-ci.

8. Capteur selon une des revendications qui précèdent, caractérisé en ce que les éléments de surface rectangulaire (13), présentent sur chaque bande de deux dessins projetés (par rapport à la direction du courant) une relation longueur (l)-largeur (b) telle que le produit de la résistance superficielle ohmique (résistance de surface) de la couche résistive et de ce rapport est identique dans les deux dessins.

9. Capteur selon une des revendications 1 à 7, caractérisé en ce qu'au point de croisement des bandes de deux dessins projetés ($M_1$, $M_2$ ou $M_3$, $M_4$) les tangentes (14, 15) des axes des bandes forment un angle (16) de 90°.

10. Capteur selon une des revendications qui précèdent, caractérisé en ce que les dessins ($M_1$, $M_2$, $M_3$, $M_4$) de l'élément de mesure et de l'élément de compensation sont répartis sur les quatre segments d'un montage en pont complet, en particulier pour une compensation de température.

11. Capteur selon la revendication 10, caractérisé en ce que la première moitié des dessins ($M_1$) de l'élément de mesure est disposée dans un secteur, et l'autre moitié des dessins ($M_2$) de l'élément de mesure, dans le secteur diamétralement opposé, la première moitié du dessin ($M_3$) de l'élément de compensation est disposée dans un autre secteur, et l'autre moitié du dessin ($M_4$) de l'élément de compensation dans le segment diamétralement opposé d'un montage en pont complet.

12. Capteur selon une des revendications qui précèdent, caractérisé en ce qu'une des couches d'isolation (9) se trouvant entre les dessins ($M_1$, $M_2$ et $M_3$, $M_4$) est le corps support (1) pourvu de la couche d'isolation (12) qui, de préférence, est soit en une matière isolante, soit en une feuille ou une plaque de métal recouverte de couches d'isolation (2) sur les deux faces.

13. Capteur selon une des revendications qui précèdent, caractérisé en ce qu'entre le corps de transfert (12) et la couche d'isolation (10), est prévue une couche intermédiaire (11) formée d'une matière organique qui, de préférence, associe intimement le dessin supérieur ($M_2$) de l'élément de mesure au corps de transfert (12).

14. Capteur selon une des revendications qui précèdent, caractérisé en ce que le corps support (1) est une pièce d'une machine, d'un dispositif d'analyse tribologique, d'un récipient, d'un tube ou d'une armature, et en ce que le corps de transfert (12) est un corps fixe ou un milieu d'introduction (20) introduisant la force, le couple de rotation, l'accélération, la pression ou la contrainte mécanique dans le capteur.

Fig. 1

Fig. 1a

Fig. 1b

Fig. 1c

Fig. 2

Fig. 3

Fig. 4

Fig. 4a

Fig. 5

Fig. 6

6